# EUROPÄISCHE PATENTSCHRIFT

(11) **EP 2 617 874 B1**
(45) Veröffentlichungstag und Bekanntmachung des Hinweises auf die Patenterteilung: **03.06.2015**
(21) Anmeldenummer: 12151641.3
(22) Anmeldetag: 18.01.2012
(51) Int. Cl.: C25B 1/04, C25B 15/00

(54) **Elektrolyseur**
Electrolyser
Electrolyseur

(43) Veröffentlichungstag der Anmeldung: 24.07.2013
(73) Patentinhaber: H-TEC Systems GmbH, 23558 Lübeck (DE)
(72) Erfinder: Mantai, Nils, 23560 Lübeck (DE); Würfel, Claus, 23558 Lübeck (DE); Wilken, Dennis, 23847 Kastorf (DE); Küter, Uwe, 23560 Lübeck (DE); Höller, Stefan, 23552 Lübeck (DE)
(74) Vertreter: Vollmann, Heiko

(56) Entgegenhaltungen:
- EP-A1- 2 180 087
- US-A- 3 432 420
- US-A- 4 235 694
- US-A- 4 846 951

## Beschreibung

Die Erfindung betrifft einen Elektrolyseur mit den im Oberbegriff von Anspruch 1 angegebenen Merkmalen.

In Elektrolyseuren wird Wasser durch elektrischen Strom in seine Bestandteile Wasserstoff und Sauerstoff zerlegt. Bekannt sind Elektrolyseure, die hierzu Elektrolysezellen in Polymerelektrolytmembranbauweise verwenden. Diese Elektrolysezellen bestehen üblicherweise im Wesentlichen aus einer Polymerelektrolytmembran, an deren beiden Außenseiten jeweils eine Gasdiffusionselektrode angeordnet ist. In dem Elektrolyseur ist im einfachsten Fall eine Elektrolysezelle, im Regelfall aber eine Vielzahl von Elektrolysezellen in Stapelaufbau zwischen zwei Endplatten angeordnet. Die Endplatten dienen einerseits zur Zufuhr elektrischer Leistung und andererseits dazu, eine für einen wirksamen Betrieb des Elektrolyseurs erforderliche Anpresskraft auf die Elektrolysezelle bzw. auf den Stapel von Elektrolysezellen auszuüben. Hierzu werden die Endplatten gegeneinander verspannt.

In US 4,846,951 A ist ein Elektrolyseur beschrieben, der einen zwischen zwei Endplatten angeordneten Elektrolysezellenstapel aufweist. Eine der beiden Endplatten ist in Stapelrichtung des Elektrolysezellenstapels frei verschiebbar, während die andere feststehend ausgebildet ist. Der Elektrolysezellenstapel wird dadurch zusammengehalten, dass mittels einer hydraulischen Vorrichtung auf die verschiebbare Endplatte ein in Richtung der feststehenden Endplatte gerichteter hydraulischer Druck ausgeübt wird. Bei Betrieb des Elektrolyseurs ist dieser hydraulische Druck in Abhängigkeit von dem von den Elektrolysezellen erzeugten Gasdruck veränderbar.

Bei einem aus US 4,235,694 A bekannten Elektrolyseur ist ein Elektrolysezellenstapel in einem geschlossenen Gehäuse angeordnet. An zwei in Stapelrichtung des Elektrolysezellenstapels voneinander beabstandeten Außenwänden sind außenseitig Hohlkammern ausgebildet, die mit den Elektrolysezellen leitungsverbunden sind, um einen den in den Elektrolysezellen erzeugten Gasdruck ausgleichenden Gegendruck auf die Außenwände auszuüben.

Aus US 3,432,420 A ist eine Elektrolysevorrichtung zum Ausschalten von Metallhydroxiden aus Flüssigkeiten bekannt. Die Elektrolysevorrichtung weist ein Gehäuse mit einem Einlass für die zu reinigende Flüssigkeit und einen Auslass für die gereinigte Flüssigkeit auf. In dem Gehäuse ist ein Stapel von Isolierplatten und dazwischen angeordneten Anoden- und Kathodenplatten angeordnet. Zwischen den Kathoden- und Anodenplatten ist jeweils ein Abstreifer zum Entfernen eines sich auf den Elektrodenplatten bildenden elektrisch isolierenden Films angeordnet. Der Stapel wird mittels einer fluidisch erzeugten und konstant gehaltenen Anpresskraft zusammengehalten.

In EP 2 180 087 A1 ist ein Elektrolyseur beschrieben, bei dem ein zwischen zwei Endplatten angeordneter Elektrolysezellenstapel in einem Gehäuse angeordnet ist. Hierbei wird eine der Endplatten von einer Wand des Gehäuses gebildet. Der Elektrolysezellenstapel ist mittels Zugankern festgelegt. Das Innere des Gehäuses wird mittels eines bei der Elektrolyse entstehenden Gases bedruckt, indem ein Teil der bei der Elektrolyse erzeugten Druckgase in das Gehäuse eingeleitet wird und einen Druck auf den Elektrolysezellenstapel ausübt, wobei der auf den Elektrolysezellenstapel ausgeübte Druck dem in dem Elektrolysezellenstapel herrschenden Gasdruck entspricht.

Es ist bekannt, dass sich die auf die Elektrolysezelle bzw. die auf den Stapel von Elektrolysezellen von den Endplatten ausgeübte Anpresskraft bei einer Zunahme des Betriebsdrucks des Elektrolyseurs, d. h. bei einer Zunahme des Gasdrucks im Inneren des Elektrolyseurs mit nachteiligen Folgen für dessen Wirkungsgrad verringert und die Anpressung im ungünstigsten Fall ganz verloren gehen kann. Entsprechend dem Stand der Technik wird versucht, diesem Effekt mit Hilfe sehr massiger und somit sehr biegesteifer Endplatten entgegenzuwirken, was allerdings nur unzureichend gelingt und zu sehr schweren Konstruktionen führt.

Vor diesem Hintergrund liegt der Erfindung die Aufgabe zugrunde, einen Elektrolyseur der oben genannten Art zu schaffen, bei dem unabhängig von dem in dem Elektrolyseur herrschenden Betriebsdruck immer eine ausreichend große Anpressung der Elektrolysezelle bzw. Elektrolysezellen sichergestellt ist.

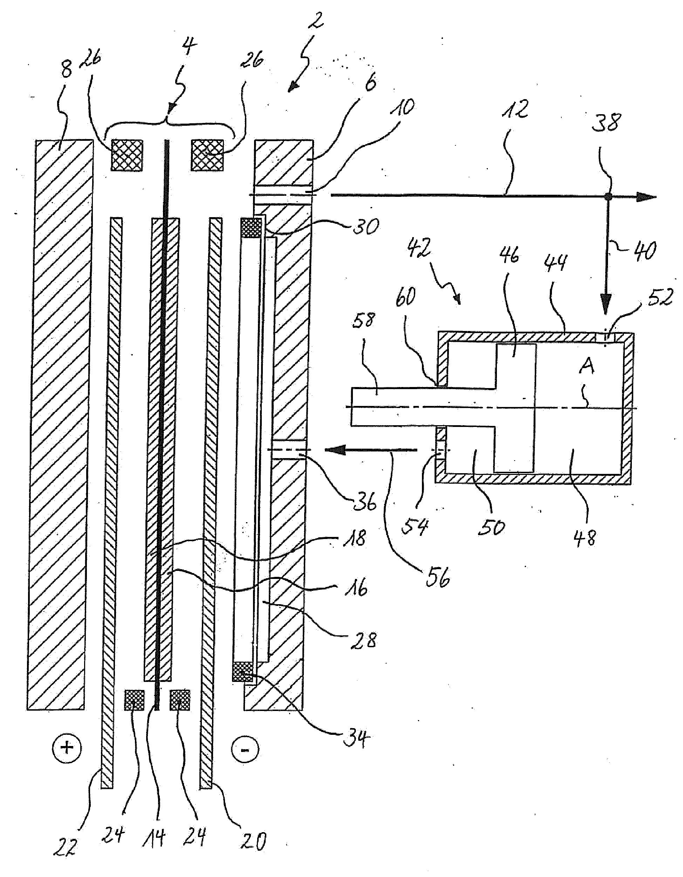

Gelöst wird diese Aufgabe durch einen Elektrolyseur mit den in Anspruch 1 angegebenen Merkmalen. Vorteilhafte Weiterbildungen dieses Elektrolyseurs ergeben sich aus den Unteransprüchen, der nachfolgenden Beschreibung sowie der Zeichnung. Hierbei können gemäß der Erfindung die in den Unteransprüchen angegebenen Merkmale jeweils für sich aber auch in geeigneter Kombination die erfindungsgemäße Lösung gemäß Anspruch 1 weiter ausgestalten.

Der erfindungsgemäße Elektrolyseur, der zur Zerlegung von Wasser in Sauerstoff und Wasserstoff und vorzugsweise zur Wasserstofferzeugung dient, weist in üblicher Weise mindestens eine zwischen zwei Endplatten angeordnete Elektrolysezelle in Polymereletrolytmembranbauweise auf. Zur Erzeugung größerer Wasserstoffmengen kann der erfindungsgemäße Elektrolyseur zwischen den beiden Endplatten auch mehrere zu einem Stapel zusammengefasste Elektrolysezellen aufweisen, daher ist nachfolgend immer dann, wenn von einer Elektrolysezelle die Rede ist, darunter auch ein Elektrolysezellenstapel zu verstehen.

Die beiden Endplatten und die dazwischen angeordnete Elektrolysezelle bilden eine gemeinsame Baueinheit. Zu diesem Zweck sind die Endplatten und die dazwischen befindliche Elektrolysezelle beispielsweise mit Zugankern miteinander verspannt. Auf diese Weise wird von den Endplatten auf die Elektrolysezelle zwar eine gewisse Anpresskraft ausgeübt, diese Anpresskraft alleine ist aber nicht ausreichend, um bei höheren Betriebsdrücken, d. h. von der Elektrolysezelle erzeugten Gasdrücken, z. B. oberhalb von 2 MPa, einen im Hinblick auf den Wirkungsgrad der Elektrolysezelle optimalen Betrieb des Elektrolyseurs zu gewährleisten. Hierzu weist der erfindungsgemäße Elektrolyseur weitere Mittel zur Erzeugung einer Anpresskraft zwischen den Endplatten auf.

In diesem Zusammenhang ist es die Grundidee der Erfindung, die auf die Elektrolysezelle ausgeübte Anpresskraft zumindest teilweise in Abhängigkeit von dem von der Elektrolysezelle erzeugten Gasdruck zu steuern. D. h. es ist eine Steuerung vorgesehen, mit der die Größe der Anpresskraft auf die Elektrolysezelle in direkter Relation zu einer Veränderung des von der Elektrolysezelle erzeugten Gasdrucks gezielt verändert werden kann. Dies bedeutet, dass dann, wenn der von der Elektrolysezelle erzeugte Gasdruck steigt, die Anpresskraft auf die Elektrolysezelle vorzugsweise proportional zu der Steigerung des Gasdrucks derart erhöht werden kann, dass der vorangehend geschilderte nachteilige Effekt einer Gasdruckerhöhung auf die Anpresskraft ausgeglichen wird und unabhängig von dem Gasdruck immer ein im Idealfall konstanter Anpressdruck auf die Elektrolysezelle eingestellt wird, der den Betrieb der Elektrolysezelle bei optimalem Wirkungsgrad ermöglicht.

Zur gasdruckabhängigen Steuerung der Anpresskraft auf die Elektrolysezelle kann der von der Elektrolysezelle erzeugte Gasdruck ggf. mittels eines in einem gasdruckbeaufschlagten Bereich des Elektrolyseurs angeordneten Drucksensors erfasst werden, wobei dann ein elektrisches Ausgangssignal des Drucksensors einer Steuerung als Eingangssignal zugeführt wird und dort in eine Stellgröße für vorzugsweise einen, ggf. aber auch mehrere Aktoren zur Erzeugung der Anpresskraft umgewandelt wird.

Die Anpresskraft auf die Elektrolysezelle wird direkt von dem von der Elektrolysezelle erzeugten Gasdruck gesteuert. D. h., dass ein Aktor zum Erzeugen der Anpresskraft direkt mit dem Gasdruck als Stellgröße druckbeaufschlagt wird, bzw. von dem Gasdruck gestellt wird. Hierzu ist ein geschlossener Überströmpfad von dem Inneren des Elektrolyseurs zu dem Aktor bereitzustellen, wobei dieser Überströmpfad an dem Elektrolyseur prinzipiell sowohl in einem Bereich, in dem bei der Wasserzerlegung der Sauerstoff anfällt also anodenseitig als auch in einem Bereich, in dem der Wasserstoff anfällt also kathodenseitig ausgebildet sein kann. Eine Ausgestaltung des erfindungsgemäßen Elektrolyseurs, bei der die Anpresskraft von dem Gasdruck des von der Elektrolysezelle erzeugten Wasserstoffs gesteuert ist, wird aber erfindungsgemäß bevorzugt. Hierzu kann ein Überströmpfad von einem Wasserstoffauslass des Elektrolyseurs zu einem die Anpresskraft erzeugenden Aktor oder zu einer den Aktor steuernden Steuerung ausgebildet sein.

Um sicherzustellen, dass unabhängig von dem von der Elektrolysezelle erzeugten Gasdruck auf die Elektrolysezelle eine ausreichend große Anpresskraft ausgeübt wird, ist der auf die Elektrolysezelle ausgeübte Anpressdruck größer als der von der Elektrolysezelle erzeugte Gasdruck. Hierfür beinhaltet der Aktor einen Druckverstärker.

Gemäß einer weiteren vorteilhaften Ausgestaltung des erfindungsgemäßen Elektrolyseurs wird die von dem Gasdruck gesteuerte Anpresskraft fluidisch erzeugt. Dementsprechend wird die Anpresskraft auf die Elektrolysezelle direkt oder indirekt über ein hierfür geeignetes Bauteil von einem Gas oder einer Flüssigkeit erzeugt, wobei Flüssigkeiten in der Regel zu bevorzugen sein werden, da sie sich quasi inkompressibel verhalten. Es ist aber auch denkbar, dass die Anpresskraft auf die Elektrolysezelle im einfachsten Fall direkt von dem von der Elektrolysezelle erzeugten Gas gestellt wird.

Im Zusammenhang mit einer fluidisch erzeugten Anpresskraft ist vorteilhaft vorgesehen, dass an zumindest einer der beiden Endplatten des Elektrolyseurs an einer der Elektrolysezelle zugewandten Seite eine druckfeste Kammer ausgebildet ist. Diese Kammer dient zur Aufnahme des Fluids, das direkt gegen die an die Kammer angrenzend angeordnete Flachseite der Elektrolysezelle gedrückt wird.

Noch vorteilhafter kann in der an der Endplatte ausgebildeten Kammer ein in Richtung der Elektrolysezelle verschiebbar geführter Anpresskörper angeordnet sein, der von dem in der Kammer befindlichen Fluid gegen die Elektrolysezelle gedrückt wird und so auf diese die Anpresskraft ausübt. Zweckmäßigerweise ist der Anpresskörper hierbei gegenüber dem Rand der Kammer fluiddicht abgedichtet, um ein Ausströmen des Fluids aus der Kammer zu verhindern.

Zum Erzeugen der Anpresskraft ist die Kammer zweckmäßigerweise mit einem Druckerzeuger leitungsverbunden. Unter einem Druckerzeuger ist in diesem Zusammenhang eine Pumpe oder dergleichen zu verstehen, mit der das Fluid in die an der Endplatte ausgebildete Kammer gedrückt wird. Der Druckerzeuger ist zweckmäßigerweise an der von der Elektrolysezelle abgewandten Seite der Endplatte angeordnet, wobei eine Fluidleitung von dem Druckerzeuger zu der Kammer durch die Endplatte geführt ist.

Konstruktiv einfach kann eine Kolben-Zylinder-Anordnung den Druckerzeuger bilden. So kann im einfachsten Fall ein Zylinder vorgesehen sein, der von einem darin beweglich geführten Kolben in zwei Zylinderkammern geteilt wird, wobei eine der Zylinderkammern mit der an der Endplatte ausgebildeten Kammer leitungsverbunden ist und der Kolben der anderen Kammer mit dem von der Elektrolysezelle erzeugten Wasserstoff druckbeaufschlagt ist. Demnach ist bevorzugt eine Zylinderkammer der Kolben-Zylinder-Anordnung mit einem Wasserstoffauslass des Elektrolyseurs leitungsverbunden.

Wie bereits angemerkt worden ist, ist anzustreben, dass ein auf die Elektrolysezelle ausgeübter Anpressdruck größer als der von der Elektrolysezelle erzeugte Gasdruck ist. In diesem Zusammenhang ist die Kolben-Zylinder-Anordnung besonders vorteilhaft derart ausgestaltet, dass sie einen Druckübersetzer bildet. Hierbei ist in für Druckübersetzer üblicher Weise die Stirnfläche des Kolbens, welche die mit der an der Endplatte ausgebildete Kammer leitungsverbundene Zylinderkammer der Kolben-Zylinder-Anordnung begrenzt, kleiner als die von dem Wasserstoff druckbeaufschlagte Stirnfläche des Kolbens, wobei sich das Druckübersetzungsverhältnis des Druckübersetzers aus dem Quotienten von letztgenannter und erstgenannter Kolbenstirnfläche ergibt.

Bevorzugt weist der Druckübersetzer ein Druckübersetzungsverhältnis auf, welches in einem Bereich von 1,1 bis 2,5 liegt und vorzugsweise zwischen 1,2 und 2,0 liegt. Es hat sich gezeigt, dass bei einem solchen Druckübersetzungsverhältnis eine ausreichend große Anpresskraft auf die Elektrolysezelle ausgeübt wird, ohne dass die Anpresskraft so groß ist, dass die Elektrolysezelle durch diese beschädigt oder gar zerstört wird.

Nachfolgend ist die Erfindung anhand eines in der Zeichnung dargestellten Ausführungsbeispiels näher erläutert.

Die Zeichnung zeigt schematisch sehr stark vereinfacht in einer Explosionsdorstellung einen Elektrolyseur 2. Der Elektrolyseur 2 weist eine Elektrolysezelle 4 auf, die zwischen zwei Endplatten 6 und 8 angeordnet ist. An der Endplatte 6 ist eine einen Wasserstoffauslass des Elektrolyseurs 2 bildende Öffnung 10 ausgebildet, an die sich außenseitig des Elektrolyseurs 2 eine nur schematisch angedeutete Leitung 12 anschließt. Über die Öffnung 10 und die daran angeschlossene Leitung 12 wird der in der Elektrolysezelle 4 erzeugte Wasserstoff zu einem in der Zeichnung nicht dargestellten Speichertank abgeführt.

In der Elektrolysezelle 4 ist zentral eine Polymerelektrolytmembran 14 angeordnet. Diese Polymerelektrolytmembran 14 ist an ihren beiden Flachseiten jeweils von einer Gasdiffusionselektrode 16 bzw. 18 abgedeckt. Außenseitig der Gasdiffusionselektrode 16 ist eine Platte 20 und außenseitig der Gasdiffusionselektrode 18 eine Platte 22 angeordnet. Die Platten 20 und 22 dienen zum Stromanschluss. Dichtungen 24 dichten die Zwischenräume zwischen der Polymerelektrolytmembran 14 und den beiden Platten 20 und 22 ab. An ihrem in der Zeichnung oberen Ende wird die Elektrolysezelle 4 von zwei Dichtungen 26 abgedichtet.

Die beiden Endplatten 6 und 8 sind miteinander über in der Zeichnung nicht dargestellte Zuganker verspannt. Hierdurch wird eine gewisse Anpresskraft auf die Elektrolysezelle 4 ausgeübt, die für einen hohen Wirkungsgrad der in der Elektrolysezelle 4 ablaufenden Elektrolyse erforderlich ist. Herrscht in dem Elektrolyseur 2 ein vornehmlich auf den bei der Elektrolyse anfallenden Wasserstoff zurückzuführender hoher Gasdruck, reicht die von den Endplatten 6 und 8 auf die Elektrolysezelle 4 ausgeübte Anpresskraft nicht mehr für eine mit ausreichendem Wirkungsgrad ablaufende Elektrolyse aus. Daher muss auf die Elektrolysezelle 4 eine zusätzliche Anpresskraft ausgeübt werden. Die hierfür gewählten baulichen Maßnahmen werden nachfolgend beschrieben.

An der der Platte 20 zugewandten Flachseite der Endplatte 6 ist eine Ausnehmung 28 ausgebildet, die sich in der von der Platte 20 abgewandter Richtung unter Bildung eines Absatzes 30 verjüngt. Der Absatz 30 erstreckt sich um den gesamten Umfang der Ausnehmung 28 und dient zur Aufnahme einer Dichtung 34, die die Endplatte 6 fluiddicht gegenüber der Platte 20 abdichtet. Durch die Endplatte 6 erstreckt sich eine Bohrung 36, die in der Ausnehmung 28 mündet. Die Bohrung 36 bildet somit einen Zugang zu der von der Ausnehmung 28 und dem Anpresskörper 32 gebildeten Kammer.

An der Leitung 12 ist ein Leitungsabzweig 38 ausgebildet. Von diesem Leitungsabzweig 38 führt eine Leitung 40 zu einer Kolben-Zylinder-Anordnung 42. Die Kolben-Zylinder-Anordnung 42 weist einen geschlossenen Hohlzylinder 44 auf, in dem ein Kolben 46 axial verschiebbar geführt ist. Der Kolben 46 teilt den Innenraum des Hohlzylinders 44 in eine erste Zylinderkammer 48 und eine zweite Zylinderkammer 50.

Umfangseitig ist an dem Hohlzylinder 44 eine Öffnung 52 ausgebildet, die in der Zylinderkammer 48 mündet. An dieser Öffnung 52 ist die Leitung 40 angeschlossen. Darüber hinaus ist an dem Hohlzylinder 44 an einer die Zylinderkammer 50 begrenzenden Stirnseite eine weitere Öffnung 54 ausgebildet. Von der Öffnung 54 führt eine schematisch in Form eines Pfeils dargestellte Leitung 56 zu der an der Endplatte 6 ausgebildeten Bohrung 36.

An dem Kolben 46 ist an der der Zylinderkammer 50 zugewandten Stirnseite eine Kolbenstange 58 ausgebildet. Diese Kolbenstange 58 erstreckt sich konzentrisch zu einer Mittelachse A des Kolbens 46 durch eine Öffnung 60, die an der die Zylinderkammer 50 begrenzenden Stirnseite des Hohlzylinders 44 ausgebildet ist. Wegen dieser aus der Zylinderkammer 50 herausgeführten Kolbenstange 58 ist die druckwirksame Fläche des Kolbens 46 an der der Zylinderkammer 50 zugewandten Stirnseite geringer als an der der Zylinderkammer 48 zugewandten Stirnseite. Aufgrund dieser Ausgestaltung bildet die Kolben-Zylinder-Anordnung 42 einen Druckübersetzer.

Die Funktionsweise des dargestellten Elektrolyseurs 2 ist wie folgt:

Der von dem Elektrolyseur 2 erzeugte Wasserstoff soll in einen nicht dargestellten Speichertank bei hohem Druck gespeichert werden. Dementsprechend herrscht in dem Elektrolyseur 2 und in der zu dem Speichertank führenden Leitung 12 ein hoher Wasserstoffdruck, der bei den bislang bekannten Elektrolyseuren dazu führen würde, dass die Gasdiffusionselektroden 16 und 18 nicht mehr im ausreichenden Maße aneinander gepresst würden.

Dies ist bei dem dargestellten Elektrolyseur 2 nicht der Fall. Erhöht sich in dem Elektrolyseur 2 der Wasserstoffdruck, hat dies zur Folge, dass sich auch der Druck in der Zylinderkammer 48 der Kolben-Zylinder-Anordnung 42 erhöht, da die Zylinderkammer 48 über die Leitungen 12 und 40 mit dem Inneren des Elektrolyseur 2 leitungsverbunden ist. Diese Druckerhöhung in der Zylinderkammer 48 führt dazu, dass der Kolben 46 in Richtung der Zylinderkammer 50 gedrückt wird, wodurch sich auch der Druck in der Zylinderkammer 50 und der damit über die Leitung 56 leitungsverbundenen Ausnehmung 28 der Endplatte 6 erhöht. Hierbei ist die Druckerhöhung in der Zylinderkammer 50 und in der Ausnehmung 28 größer als in der Zylinderkammer 48, da die Kolben-Zylinder-Anordnung 42 aufgrund der Ausgestaltung des Kolbens 46 einen Druckübersetzer bildet.

Aufgrund der Druckerhöhung in der Zylinderkammer 48 drückt ein in der Ausnehmung 28 befindliches Fluid mit entsprechend verstärktem Druck gegen die Platte 20, so dass sichergestellt ist, dass die beiden Gasdiffusionselektroden 16 und 18 in ausreichendem Maße aneinander gepresst werden.

### Bezugszeichenliste

- 2: - Elektrolyseur
- 4: - Elektrolysezelle
- 6: - Endplatte
- 8: - Endplatte
- 10: - Öffnung
- 12: - Leitung
- 14: - Polymerelektrolytmembran
- 16: - Gasdiffusionselektrode
- 18: - Gasdiffusionselektrode
- 20: - Platte
- 22: - Platte
- 24: - Dichtung
- 26: - Dichtung
- 28: - Ausnehmung
- 30: - Absatz
- 34: - Dichtung
- 36: - Bohrung
- 38: - Leitungsabzweig
- 40: - Leitung
- 42: - Kolben-Zylinder-Anordnung
- 44: - Hohlzylinder
- 46: - Kolben
- 48: - Zylinderkammer
- 50: - Zylinderkammer
- 52: - Öffnung
- 54: - Öffnung
- 56: - Leitung
- 58: - Kolbenstange
- 60: - Öffnung
- A: - Mittelachse

## Patentansprüche

1. Elektrolyseur (2), mit mindestens einer zwischen zwei Endplatten (6, 8) angeordneten Elektrolysezelle (4) in Polymerelektrolytmembranbauweise, und mit Mitteln zur Erzeugung einer Anpresskraft zwischen den Endplatten (6, 8), **dadurch gekennzeichnet, dass** die Mittel zur Erzeugung einer Anpresskraft einen Aktor aufweisen, welcher über einen geschlossenen Überströmpfad von dem Inneren des Elektrolyseurs (2) zu dem Aktor von dem von der Elektrolysezelle (4) erzeugten Gasdruck gesteuert ist, wobei der Aktor einen Druckverstärker beinhaltet, welcher einen auf die Elektrolysezelle (4) ausgeübten Anpressdruck erzeugt, der größer als der von der Elektrolysezelle (4) erzeugte Gasdruck ist.

2. Elektrolyseur (2) nach Anspruch 1, **dadurch gekennzeichnet, dass** der Überströmpfad von einem Wasserstoffauslass des Elektrolyseurs (2) zu dem Aktor ausgebildet ist.

3. Elektrolyseur (2) nach einem der vorangehenden Ansprüche, **dadurch gekennzeichnet, dass** an zumindest einer Endplatte (6) an einer der Elektrolysezelle (4) zugewandten Seite eine druckfeste Kammer ausgebildet ist.

4. Elektrolyseur (2) nach Anspruch 3, **dadurch gekennzeichnet, dass** die Kammer mit einem Druckerzeuger leitungsverbunden ist.

5. Elektrolyseur (2) nach Anspruch 4, **dadurch gekennzeichnet, dass** eine Kolben-Zylinder-Anordnung (42) den Druckerzeuger bildet.

6. Elektrolyseur (2) nach Anspruch 5, **dadurch gekennzeichnet, dass** eine Zylinderkammer (48) der Kolben-Zylinder-Anordnung (42) mit einem Wasserstoffauslass des Elektrolyseurs (2) leitungsverbunden ist.

7. Elektrolyseur (2) nach einem der Ansprüche 4 oder 5, **dadurch gekennzeichnet, dass** die Kolben-Zylinder- Anordnung (42) einen Druckübersetzer bildet.

8. Elektrolyseur (2) nach Anspruch 7, **dadurch gekennzeichnet, dass** der Druckübersetzer ein Druckübersetzungsverhältnis aufweist, welches in einem Bereich von 1,1 bis 2,5 liegt und vorzugsweise zwischen 1,2 und 2,0 liegt.

## Claims

1. An electrolyser (2) with at least one electrolysis cell (4) arranged between two end plates (6, 8), in a polymer electrolyte membrane construction manner, and with means for producing a pressing force between the end plates (6, 8), **characterised in that** the means for producing a pressing force comprise an actuator which via a closed overflow path from the inside of the electrolyser (2) to the actuator is controlled by the gas pressure produced by the electrolysis cell (4), wherein the actuator comprises a pressure amplifier which produces a pressing pressure exerted onto the electrolysis cell (4), which is greater than the gas pressure produced by the electrolysis cell (4).

2. An electrolyser (2) according to claim 1, **characterised in that** the overflow path is designed from a hydrogen outlet of the electrolyser (2) to the actuator.

3. An electrolyser (2) according to one of the preceding claims, **characterised in that** a pressure-proof chamber is formed on at least one end plate (6), at a side facing the electrolysis cell (4).

4. An electrolyser (2) according to claim 3, **characterised in that** the chamber is conduit-connected to a pressure producer.

5. An electrolyser (2) according to claim 4, **characterised in that** a piston-cylinder arrangement (42) forms the pressure producer.

6. An electrolyser (2) according to claim 5, **characterised in that** a cylinder chamber (48) of the piston-cylinder arrangement (42) is conductively connected to a hydrogen outlet of the electrolyser (2).

7. An electrolyser (2) according to one of the claims 4 or 5, **characterised in that** the piston-cylinder arrangement (42) forms a pressure converter.

8. An electrolyser (2) according to claim 7, **characterised in that** the pressure converter has a pressure conversion ratio which lies in a region of 1.1 to 2.5 and preferably between 1.2 and 2.0.

## Revendications

1. Électrolyseur (2), comprenant au moins une cellule d'électrolyse (4) disposée entre deux plaques d'extrémité (6, 8) selon une construction de membrane d'électrolyse, et comportant des moyens destinés à générer une force de pression entre les deux plaques d'extrémité (6, 8), **caractérisé en ce que** les moyens destinés à générer une force de pression comportent un actionneur qui, via une voie de trop-plein fermée s'étendant de l'intérieur de l'électrolyseur (2) à l'actionneur, est commandé par la pression gazeuse générée par la cellule d'électrolyse (4), l'actionneur comportant un amplificateur de pression qui génère une pression d'application exercée sur la cellule d'électrolyse (4) qui est supérieure à la pression gazeuse générée par la cellule d'électrolyse (4).

2. Électrolyseur (2) selon la revendication 1, **caractérisé en ce que** la voie de trop-plein s'étend d'une sortie d'hydrogène de l'électrolyseur (2) à l'actionneur.

3. Électrolyseur (2) selon l'une des revendications précédentes, **caractérisé en ce qu'**est formée au niveau d'au moins une plaque d'extrémité (6), sur un côté orienté vers la cellule d'électrolyse (4), une chambre résistant à la pression.

4. Électrolyseur (2) selon la revendication 3, **caractérisé en ce que** la chambre est raccordée par conduit à un générateur de pression.

5. Électrolyseur (2) selon la revendication 4, **caractérisé en ce qu'**un ensemble piston-vérin (42) forme le générateur de pression.

6. Électrolyseur (2) selon la revendication 5, **caractérisé en ce qu'**une chambre de vérin (48) de l'ensemble piston-vérin (42) est reliée par conduit à une sortie d'hydrogène de l'électrolyseur (2).

7. Électrolyseur (2) selon l'une des revendications 4 ou 5, **caractérisé en ce que** l'ensemble piston-vérin (42) forme un multiplicateur de pression.

8. Électrolyseur (2) selon la revendication 7, **caractérisé en ce que** le multiplicateur de pression présente un rapport de multiplication de pression qui se situe dans une plage de 1,1 à 2,5, de préférence entre 1,2 et 2,0.
